# FASCICULE DE BREVET EUROPEEN

(11) **EP 3 458 293 B1**
(45) Date de publication et mention de la délivrance du brevet: **25.12.2024**
(21) Numéro de dépôt: 17715515.7
(22) Date de dépôt: 06.03.2017
(51) Int. Cl.: B60K 6/442, B60W 20/00, B60W 20/15, B60W 20/40, B60W 30/19, B60W 10/06, B60W 10/08, B60W 10/11, B60W 10/26

(54) **PROCEDE DE CONTROLE DU COUPLE DISPONIBLE SUR UN VEHICULE HYBRIDE PENDANT LES PASSAGES DE VITESSES**
VERFAHREN ZUR STEUERUNG DES AN EINEM HYBRIDFAHRZEUG WÄHREND DES GANGWECHSELS VERFÜGBAREN DREHMOMENTS
METHOD FOR CONTROLLING THE TORQUE AVAILABLE ON A HYBRID VEHICLE WHILE CHANGING GEARS

(30) Priorité: 20.05.2016 FR 1654522
(43) Date de publication de la demande: 27.03.2019
(73) Titulaire: Renault s.a.s, 92100 Boulogne Billancourt (FR); NISSAN MOTOR CO., LTD., Yokohama-shi, Kanagawa 221-0023 (JP)
(72) Inventeur: MERIENNE, Ludovic, 91190 GIF SUR YVETTE (FR); KETFI-CHERIF, Ahmed, 78990 ELANCOURT (FR)
(74) Mandataire: Renault Group
(86) Numéro de dépôt international: PCT/FR2017/050494
(87) Numéro de publication internationale: WO 2017/198913

(56) Documents cités:
- EP-A1- 2 544 346
- EP-A1- 2 544 346
- WO-A2-2014/207332
- WO-A2-2014/207332
- DE-A1- 102008 043 849
- DE-A1- 102008 043 849
- FR-A1- 2 847 638
- FR-A1- 2 847 638

## Description

La présente invention concerne le contrôle du couple disponible sur un véhicule hybride pendant les passages de vitesses.

Plus précisément, elle a pour objet un procédé de contrôle du couple disponible pendant les changements de rapports d'un groupe motopropulseur composé d'un moteur thermique relié à un premier arbre d'entrée de boîte de vitesses qui peut transmettre son couple aux roues sur différents rapports de transmission, d'une première machine électrique reliée à un deuxième arbre d'entrée de celle-ci, et d'une deuxième machine électrique reliée alternativement au premier ou au deuxième arbre d'entrée de la boîte.

La publication WO 2014/207332 décrit une transmission hybride de ce type, disposant de plusieurs rapports électriques, thermiques et hybrides, où les couples du moteur thermique et d'au moins une machine électrique s'additionnent en direction des roues. Le couple d'origine thermique est transmis aux roues sur un rapport de transmission « thermique », et celle du couple de la machine électrique principale sur un rapport « électrique ». Lors de changements de rapport de transmission thermique en mode hybride, le couple du moteur thermique est interrompu. Le couple de la machine électrique principale est alors piloté pour synchroniser le moteur thermique sur son nouveau rapport, tout en fournissant du couple à la roue.

Le document FR 2 847 638 A1 divulgue une transmission hybride dans laquelle, pendant des phases de rupture de couple dues à un changement de rapports, les deux machines électriques opèrent en mode "série".

Dans la pratique, l'architecture électrique du véhicule, en particulier la puissance disponible sur la machine électrique principale, limite l'apport de celle-ci pendant les changements de rapport thermique. Si l'interruption du couple thermique est peu compensée, le conducteur et les passagers du véhicule ressentent ces passages, comme ceux d'une boîte de vitesse robotisée à rupture de couple.

Il est donc souhaitable de parvenir à estomper la rupture de couple ressentie par le conducteur et les usagers du véhicule, pendant les passages de vitesses.

Une diminution du couple disponible autour du passage répond en théorie à ce problème. Mais, une telle mesure est inacceptable, pour son impact négatif sur les performances. La solution est donc à rechercher dans une augmentation du couple à la roue pendant les passages. Toute disposition consistant à augmenter temporairement la tension du réseau de bord, présente à cet égard un intérêt. Certains systèmes de batterie, qui ont la faculté de moduler leur tension de sortie par des relais mettant des cellules en série ou bien en parallèle, pourraient notamment contribuer à atténuer le trou de puissance ressenti pendant les passages. Toutefois, ces systèmes ont l'inconvénient d'alourdir, ou même de remettre en cause, l'architecture du véhicule.

La présente invention vise à augmenter le couple disponible pendant les changements de rapports de transmission thermique, notamment à haute vitesse, afin d'estomper leur « trou de puissance », sans adaptation particulière des composants ou de l'architecture électrique du véhicule.

Dans ce but, elle propose un procédé de contrôle selon la revendication 1.

La présente invention sera mieux comprise à la lecture de la description suivante d'un mode de réalisation particulier de celle-ci, en se reportant aux dessins annexés sur lesquels :
- la figure 1 est un schéma d'architecture hybride,
- la figure 2 regroupe ses courbes de passage,
- la figure 3 identifie les rapports demandés par rapport à ces courbes, et
- la figure 4 est le schéma électrique du réseau de puissance de cette boîte.

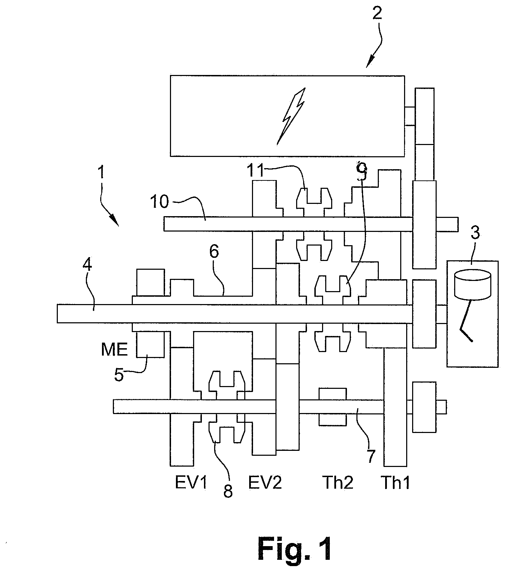

La boîte de vitesse 1 de la figure 1 est par exemple de type « robotisée », c'est-à-dire que son fonctionnement est celui d'une boîte manuelle, mais que les passages de vitesse sont automatisés. Sur le schéma, on a représenté une machine électrique, dite HSG (pour alterno-démarreur haute tension) 2, un moteur thermique 3 sur un arbre primaire plein 4. Une autre machine électrique 5 dite ME, plus puissante que la première, est montée sur un arbre primaire creux 6. L'arbre secondaire de la boîte 7 est relié au différentiel (non représenté), puis aux roues du véhicule.

Le premier crabot 8 situé sur l'arbre secondaire 7 permet de modifier le rapport de la machine électrique ME 5, de façon indépendante du reste de la boîte, pour disposer de deux rapports électriques EV1 et EV2. Le deuxième crabot 9, situé sur l'arbre primaire plein 4, permet de modifier le rapport du moteur thermique 3 de façon indépendante des rapports électriques, pour établir deux rapports thermiques Th2 et Th4, indépendamment du rapport électrique. Le troisième crabot 11, situé sur l'arbre de transfert 10, permet d'établir un troisième rapport thermique Th3, lorsqu'il se déplace vers la droite sur le schéma. Il est possible de choisir de façon indépendante à chaque instant, le rapport voulu sur la première machine électrique ME et celui voulu sur le groupe moteur thermique Mth et la deuxième machine électrique HSG 2. Les combinaisons des rapports thermiques et des rapports électriques permettent de réaliser des rapports hybrides, notés HEVxy, où x désigne le rapport du moteur thermique, et y le rapport de la ME.

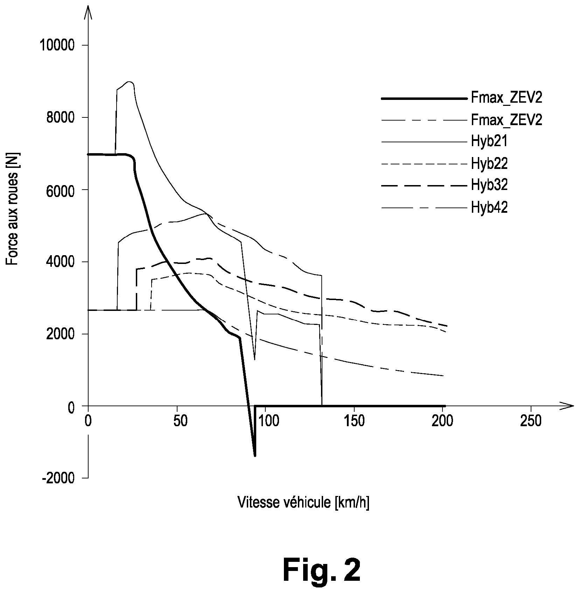

Les courbes de passages de vitesses de la boîte sont regroupées sur la figure 2. La boîte 1 permet d'établir deux rapports électriques ZE1 et ZE2, et quatre rapports hybrides Hyb21, Hyb22, Hyb32, Hyb42, en fonction du « rapport thermique » et du « rapport électrique ». Les courbes tracent les efforts maximum réalisables (force aux roues en Newton) sur les rapports électriques et hybrides en fonction de la vitesse.

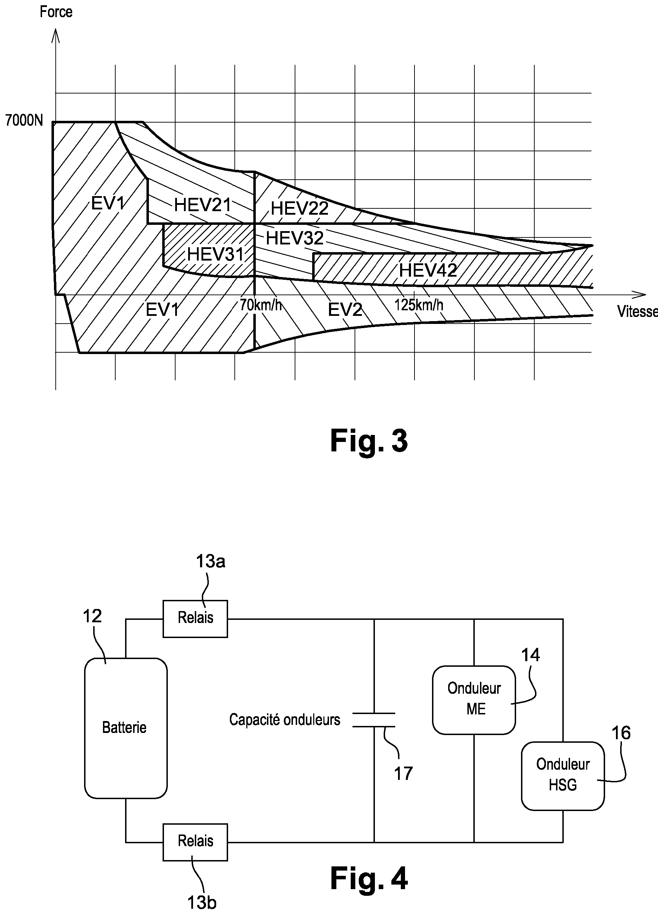

Dans l'application visée, on peut convenir que le rapport cible soit toujours (quelle que soit la vitesse de déplacement) un rapport électrique ZEV, dès lors que ce rapport de réaliser la demande de couple du conducteur. Par défaut, le rapport engagé devient le rapport hybride le plus long, permettant de réaliser la demande. Dans cette hypothèse, les rapports demandés peuvent se répartir sur un graphe, comme celui de la figure 3. Cette figure permet d'identifier les changements de rapport susceptibles de se produire au cours d'un roulage classique. On voit par exemple qu'en accélération en pied à fond, on passe de HEV22 vers HEV32 autour de 125km/h. Pour ce passage, le deuxième rapport thermique doit être déconnecté de la transmission pour être synchronisé sur le nouveau rapport thermique. Avec une tension batterie de 270V, la première machine ME peut fournir par exemple une puissance de 35kW. La deuxième machine HSG peut fournir une puissance de 25kW, tandis que le moteur thermique Mth fournit 70kW. La puissance globale fournie par la boîte à la roue avant le passage, est alors de de 105kW. Après le passage, la boîte fournit sensiblement la même puissance (à la variation de la puissance du moteur thermique près. En revanche, pendant le passage, l'ensemble moteur thermique et HSG est déconnecté des roues. Seule la ME fournit alors de la puissance à la roue, soit 35kW.

Le GMP (Groupe Motopropulseur) souffre ainsi d'un « *trou de puissance* » lors de ce passage de vitesse. A 125km/h, la puissance absorbée par l'aérodynamique du véhicule est de l'ordre de 25kW. La puissance disponible pour l'accélération passe en réalité de 80kW à 10kW durant le passage. Une telle chute d'accélération (de 87%), donne au conducteur l'impression que son véhicule n'accélère plus, en dépit du couple fourni par la machine électrique principale ME. Son ressenti est celui d'un véhicule doté d'une boîte de vitesse robotisée à rupture de couple.

Sur la figure 4, on a fait apparaître la batterie 12 du véhicule reliée par deux relais 13a 13b aux onduleurs 14, 16 des deux machines électriques, montés en parallèle sur le réseau électrique, avec une capacité d'onduleurs 17.

La solution proposée consiste à augmenter la puissance fournie par la première machine électrique principale ME pendant les changements de rapport de transmission du moteur thermique (Mth), en faisant fonctionner la deuxième machine électrique (HSG) en mode régénératif. Toute la puissance électrique de celle-ci est alors transmise à la première, qui l'utilise pour compenser la diminution de couple à la roue entraînée par le découplage temporaire du moteur thermique. La tension d'alimentation des onduleurs est augmentée à cet effet. Dans l'exemple décrit ci-dessus, une alimentation de 450V au lieu d'une tension moyenne de 200V permet à la ME de fournir environ 70kW et au HSG de fournir environ 50kW, en utilisant les composants habituels du réseau électrique. La tension d'alimentation des onduleurs est donc augmentée pour augmenter la puissance atteignable par les deux machines électriques pendant le changement de rapport. La première machine électrique (ME) fournit ainsi à la roue, toute la puissance que lui transmet la deuxième machine électrique (HSG).

La méthode proposée est applicable à une boîte telle que celle de la figure 1 (où les coupleurs sont de préférence des coupleurs à crabots ou clabots, dont l'architecture est schématisée sur la figure 4. Elle consiste à enchaîner les étapes suivantes :
1. annulation des couples de la ME et du HSG,
2. ouverture des relais de la batterie,
3. passage du HSG en mode régénératif : le HSG régule la tension de la capacité des onduleurs à 450V et fournit alors sur l'arbre du moteur thermique un couple négatif, (limité à la puissance max du HSG à 450V, soit environ 50kW) qui est restitué directement en couple positif à la roue par la ME,
4. annulation du couple sur le crabot primaire en diminuant le couple du moteur thermique jusqu'à l'équilibre des puissances du moteur thermique et du HSG : Puissance(Mth) - - Puissance(HSG),
5. dé-crabotage du pignon de rapport abandonné sur l'arbre primaire,
6. synchronisation de l'arbre primaire sur le rapport cible : si celui-ci est plus long que le rapport abandonné, le régime du moteur thermique est réduit en diminuant davantage son couple (couple Mth),
7. crabotage du pignon du nouveau rapport, et augmentation du couple du moteur thermique jusqu'à sa puissance maximum,
8. annulation des couples de la ME et du HSG en annulant le couple HSG un peu plus rapidement pour faire diminuer la tension de la capacité de l'onduleur,
9. reconnexion des relais de la batterie,
10. retour des couples de la ME et du HSG dans la satisfaction globale de la demande de couple du conducteur.

Lorsque la boîte de vitesse est une boîte de vitesses à crabots ou à clabots, le découplage du moteur thermique s'effectue en dé-crabotant un pignon de son arbre d'entrée. Son couplage sur un nouveau rapport, s'effectue par crabotage d'un nouveau pignon sur son arbre d'entrée.

La méthode proposée comporte ainsi les étapes suivantes, avant le découplage du moteur thermique et de son arbre d'entrée :
- annulation des couples des deux machines électriques,
- ouverture des relais de la batterie,
- passage de la deuxième machine électrique en mode de récupération d'énergie,
- diminution du couple du moteur thermique jusqu'à l'équilibre de sa propre puissance et de la puissance récupérée par la deuxième machine électrique.

De préférence, le couple de la deuxième machine électrique HSG est annulé plus rapidement que celui de la première, pour faire diminuer la tension de la capacité des onduleurs.

Après son découplage, l'arbre d'entrée 4 lié au moteur thermique est synchronisé sur le rapport ciblé en pilotant le couple du moteur thermique (Mth), avant le couplage du moteur thermique à son arbre d'entrée sur le nouveau rapport. De préférence, le couplage du moteur thermique est suivi d'une augmentation de couple jusqu'à sa puissance maximum.

Pendant le changement de rapport, la boîte de vitesses 1 adopte un fonctionnement de type hybride série, où la première machine électrique ME peut fournir à la roue exactement la puissance que fournit le HSG au réseau haute tension. Le moteur thermique maintient le régime du HSG. Les relais 13a, 13b de la batterie 12 sont ouverts pendant le changement de rapport. Leur ouverture permet d'augmenter de façon simple la tension sur le réseau, en évitant que la batterie absorbe toute la puissance fournie par le HSG. La mise hors circuit de la batterie permet ainsi d'augmenter les puissances réalisables pendant le passage.

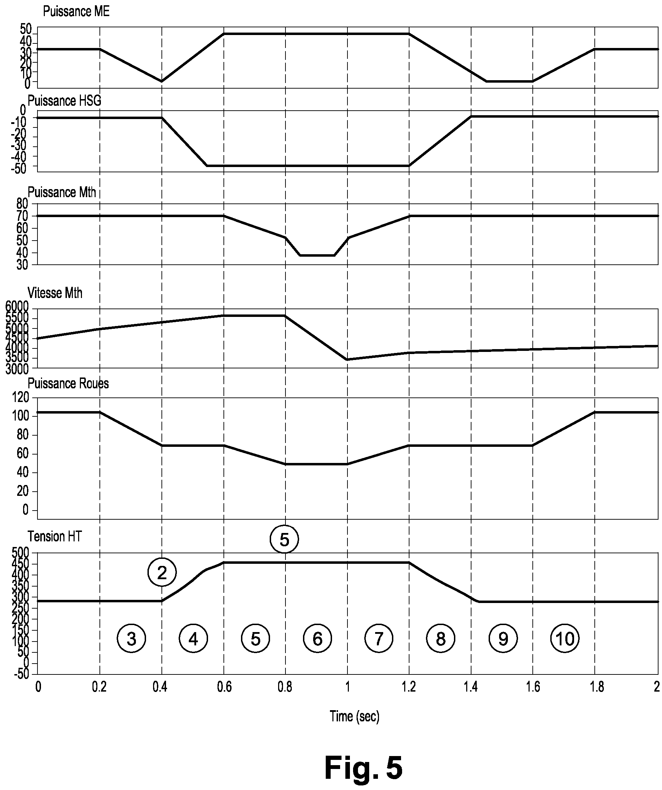

La figure 5 illustre l'évolution des puissances de chaque organe, puissance ME, puissance HSG, puissance Mth et puissance à la roue, au cours du passage, avec l'évolution du régime du moteur thermique et la tension de réseau HT (Haute Tension) correspondantes de l'étape 1 à 10. Ces courbes mettent en évidence le gain apporté par l'invention. Sans compensation pendant le changement de rapport, la puissance à la roue serait tombée à 35kW. Grâce à l'invention, on maintient la puissance à la roue à 70kW pendant trois étapes, et à 50kW pendant une étape. Le « trou de puissance » reste ainsi inférieur à 50%. La perte d'accélération est réduite, de sorte que le conducteur ressent en permanence la disponibilité de puissance pour accélérer.

Il est par ailleurs toujours possible d'augmenter la tension du réseau, pour réduire davantage le trou de puissance. Toutefois, cette adaptation peut exiger le redimensionnement de certains composants du système, ce qui n'est pas le cas avec les simples mesures de commande proposés par l'invention.

Dans le cas d'un véhicule de catégorie dite « *mild hybrid* » ou la machine électrique principale est principalement destinée à une fonction de relance (ou « *boost* »)*,* ou au roulage à basse vitesse, on peut faire le choix de limiter la puissance disponible à haute vitesse à celle du moteur thermique, notamment en cas d'accélération pied à fond, pour ne pas vider la batterie trop rapidement. Dans l'exemple décrit, la perte de puissance pendant le changement de rapport, n'est plus que de 20kW (différence entre la puissance maximum du Mth égale à 70kW). La puissance minimale pendant le changement de rapport est égale à 50kW.

En conclusion, l'invention se traduit par une élévation transitoire de la tension du réseau haute tension (HT) pendant les passages de vitesses. L'intérêt majeur de de l'invention est qu'elle ne nécessite aucun ajout dans le système, si on se limite à 450V maximum sur le réseau dans l'exemple décrit.

## Revendications

1. Procédé de contrôle du couple disponible pendant les changements de rapports d'un groupe motopropulseur composé d'un moteur thermique (Mth) relié à un premier arbre d'entrée (4) de boîte de vitesses qui peut transmettre son couple aux roues sur différents rapports de transmission, d'une première machine électrique (ME) reliée à un deuxième arbre d'entrée (6) de celle-ci, et d'une deuxième machine électrique (HSG) reliée au premier arbre d'entrée de la boîte, la deuxième machine électrique (HSG) passant, pendant les changements de rapport de transmission du moteur thermique (Mth), en mode régénératif avant le découplage du moteur thermique, pour transmettre toute sa puissance électrique à la première machine électrique (ME) qui l'utilise pour compenser la diminution de couple à la roue entraînée par le découplage temporaire du moteur thermique, et ledit procédé comportant les étapes suivantes, avant le découplage du moteur thermique et de son arbre d'entrée (4) :
- annulation des couples des deux machines électriques (ME), (HSG),
- passage de la deuxième machine électrique en mode de récupération d'énergie,
- diminution du couple du moteur thermique jusqu'à l'équilibre de sa propre puissance et de la puissance récupérée par la deuxième machine électrique,
**caractérisé en ce que** ledit procédé comprend également les étapes suivantes, avant le découplage du moteur thermique et de son arbre d'entrée (4):
- augmentation de la tension d'alimentation des onduleurs pour augmenter la puissance fournie par les deux machines électriques pendant le changement de rapport, et
- ouverture des relais (13a, 13b) de la batterie (12).

2. Procédé de contrôle de couple selon la revendication 1, **caractérisé en ce que** la première machine électrique (ME) fournit à la roue la puissance que lui fournit la deuxième machine électrique (HSG).

3. Procédé de contrôle selon l'une des revendications précédentes, **caractérisé en ce que** le couple de la deuxième machine électrique (HSG) est annulé plus rapidement que celui de la première (ME), pour faire diminuer la tension de la capacité des onduleurs.

4. Procédé de contrôle selon l'une des revendications précédentes, **caractérisé en ce que** le découplage du moteur thermique s'effectue en dé-crabotant un pignon de son arbre d'entrée (4).

5. Procédé de contrôle du couple selon la revendication 1 ou 2, **caractérisé en ce que** après son découplage, l'arbre d'entrée lié au moteur thermique est synchronisé sur le rapport ciblé en pilotant le couple du moteur thermique (Mth).

6. Procédé de contrôle de couple selon la revendication 3, **caractérisé en ce que** le couplage du moteur thermique sur son nouveau rapport de transmission s'effectue par crabotage d'un nouveau pignon sur son arbre d'entrée (4).

7. Procédé de contrôle du couple selon la revendication 5 ou 6, **caractérisé en ce que** le couplage du moteur thermique est suivi d'une augmentation de couple (Mth) jusqu'à sa puissance maximum.

## Patentansprüche

1. Verfahren zur Steuerung des Drehmoments, das während der Gangwechsel eines Antriebsstrangs verfügbar ist, welcher aus einem Verbrennungsmotor (Mth), der mit einer ersten Eingangswelle (4) eines Schaltgetriebes verbunden ist und sein Drehmoment mit unterschiedlichen Übersetzungsverhältnissen auf die Räder übertragen kann, einer ersten elektrischen Maschine (ME), die mit einer zweiten Eingangswelle (6) desselben verbunden ist, und einer zweiten elektrischen Maschine (HSG), die mit der ersten Eingangswelle des Getriebes verbunden ist, besteht,
wobei die zweite elektrische Maschine (HSG) während der Gangwechsel des Verbrennungsmotors (Mth) in einen Regenerativmodus übergeht, bevor der Verbrennungsmotor entkoppelt wird, um ihre gesamte elektrische Leistung zu der ersten elektrischen Maschine (ME) zu übertragen, die diese dazu nutzt, die Drehmomentverringerung an dem angetriebenen Rad aufgrund der vorübergehenden Entkopplung des Verbrennungsmotors zu kompensieren, und wobei das Verfahren vor dem Entkoppeln des Verbrennungsmotors und seiner Eingangswelle (4) die folgenden Schritte umfasst:
- Aufheben der Drehmomente der zwei elektrischen Maschinen (ME), (HSG),
- Übergang der zweiten elektrischen Maschine in einen Energierückgewinnungsmodus,
- Verringerung des Drehmoments des Verbrennungsmotors bis zu dem Gleichgewicht zwischen seiner eigenen Leistung und der durch die zweite elektrische Maschine zurückgewonnenen Leistung,
**dadurch gekennzeichnet, dass** das Verfahren vor dem Entkoppeln des Verbrennungsmotors und seiner Eingangswelle (4) ferner die folgenden Schritte umfasst:
- Erhöhen der Versorgungsspannung der Wechselrichter, um die während des Gangwechsels durch die zwei elektrischen Maschinen bereitgestellte Leistung zu erhöhen, und
- Öffnen der Relais (13a, 13b) der Batterie (12).

2. Verfahren zur Drehmomentsteuerung nach Anspruch 1, **dadurch gekennzeichnet, dass** die erste elektrische Maschine (ME) dem Rad die Leistung bereitstellt, die ihr die zweite elektrische Maschine (HSG) bereitstellt.

3. Steuerungsverfahren nach einem der vorhergehenden Ansprüche, **dadurch gekennzeichnet, dass** das Drehmoment der zweiten elektrischen Maschine (HSG) schneller aufgehoben wird als das der ersten (ME), um die Spannung des Kondensators der Wechselrichter zu verringern.

4. Steuerungsverfahren nach einem der vorhergehenden Ansprüche, **dadurch gekennzeichnet, dass** die Entkopplung des Verbrennungsmotors durch das Auskuppeln eines Ritzels von seiner Eingangswelle (4) erfolgt.

5. Verfahren zur Steuerung des Drehmoments nach Anspruch 1 oder 2, **dadurch gekennzeichnet, dass** die mit dem Verbrennungsmotor verbundene Eingangswelle nach ihrer Entkopplung auf den angestrebten Gang synchronisiert wird, indem das Drehmoment des Verbrennungsmotors (Mth) angesteuert wird.

6. Verfahren zur Drehmomentsteuerung nach Anspruch 3, **dadurch gekennzeichnet, dass** die Kopplung des Verbrennungsmotors auf seinen neuen Gang durch die Kupplung eines neuen Ritzels mit seiner Eingangswelle (4) erfolgt.

7. Verfahren zur Steuerung des Drehmoments nach Anspruch 5 oder 6, **dadurch gekennzeichnet, dass** auf die Kopplung des Verbrennungsmotors eine Drehmomenterhöhung (Mth) bis auf seine maximale Leistung erfolgt.

## Claims

1. Method for controlling the torque available during gear changes of a powertrain made up of a combustion engine (Mth) connected to a first input shaft (4) of a gearbox which can transmit its torque to the wheels in different transmission ratios, of a first electric machine (ME) connected to a second input shaft (6) thereof, and of a second electric machine (HSG) connected to the first input shaft of the gearbox,
the second electric machine (HSG), during the changes in combustion engine (Mth) transmission ratio, switching into regenerative mode before the combustion engine is uncoupled, so as to transmit all its electrical power to the first electric machine (ME) which uses it to compensate for the reduction in torque to the driven wheel which is brought about by the temporary uncoupling of the combustion engine, and said method comprising the following steps, before the uncoupling of the combustion engine and of its input shaft (4):
- cancellation of the torques of the two electric machines (ME), (HSG),
- switching of the second electric machine into energy recovery mode,
- reduction of the torque of the combustion engine until its own power balances the power recovered by the second electric machine,
**characterized in that** said method also comprises the following steps, before uncoupling of the combustion engine and of its input shaft (4):
- increasing the supply voltage to the inverters in order to increase the power supplied by the two electric machines during gear change, and
- opening the relays (13a, 13b) of the battery (12).

2. Torque control method according to Claim 1, **characterized in that** the first electric machine (ME) supplies the wheel with the power supplied to it by the second electric machine (HSG).

3. Control method according to one of the preceding claims, **characterized in that** the torque of the second electric machine (HSG) is cancelled more rapidly than that of the first (ME), so as to reduce the voltage of the inverters' capacitor.

4. Control method according to one of the preceding claims, **characterized in that** the uncoupling of the combustion engine is performed by disengaging a pinion of its input shaft (4).

5. Torque control method according to Claim 1 or 2, **characterized in that**, after it has been uncoupled, the input shaft connected to the combustion engine is synchronized with the target ratio by controlling the torque of the combustion engine (Mth).

6. Torque control method according to Claim 3, **characterized in that** the coupling of the combustion engine to its new transmission ratio is performed by engaging a new pinion on its input shaft (4).

7. Torque control method according to Claim 5 or 6, **characterized in that** the coupling of the combustion engine is followed by an increase in (Mth) torque up to its maximum power.
